# EUROPEAN PATENT APPLICATION

(11) **EP 2 754 555 A1**
(43) Date of publication of application: **16.07.2014**
(21) Application number: 12830132.2
(22) Date of filing: 30.08.2012
(51) Int. Cl.: B32B 27/36, B32B 27/18, G02B 1/10, G02B 1/11

(54) **COATED FILM**

(30) Priority: 06.09.2011 JP 2011193414
(71) Applicant: Mitsubishi Plastics, Inc., Tokyo 100-8252 (JP)
(72) Inventor: KATO, Yuzo, Maibara-shi Shiga 521-0234 (JP); KAWASAKI, Taishi, Maibara-shi Shiga 521-0234 (JP); FUJITA, Masato, Maibara-shi Shiga 521-0234 (JP)
(74) Representative: Merkle, Gebhard
(86) International application number: PCT/JP2012/072064
(87) International publication number: WO 2013/035629

(57) **Abstract**

According to the present invention, there is provide a coated film that suffers from less occurrence of interference fringes when forming various surface functional layers such as a hard coat layer thereon, and can exhibit a good visibility and an excellent adhesion property to the surface functional layers.

The present invention relates to a coated film comprising:
a polyester film,
a first coating layer formed on one surface of the polyester film which is prepared from a coating solution comprising a polyester resin, titanium oxide and an epoxy compound, and
a second coating layer formed on the other surface of the polyester film which is prepared from a coating solution comprising a metal oxide and two or more crosslinking agents and which has an absolute reflectance having one minimum value in a wavelength range of 400 to 800 nm, and which has the absolute reflectance at the minimum value of not less than 4.0%.

## Description

### TECHNICAL FIELD

The present invention relates to a coated film, and more particularly, to a coated film that can be suitably used in the applications requiring prevention of occurrence of interference fringes owing to reflection of external light, for example, such as liquid crystal displays, plasma display panels and organic electroluminescence.

### BACKGROUND ART

In recent years, polyester films have been used in various applications such as a touch panel as a member of liquid crystal displays and plasma display panels, a reflection-preventive film, a prism sheet, a light-diffusing sheet, an electromagnetic shielding film or the like. In these applications, it has been required that a base film used therein is excellent in transparency and visibility.

These films have been often subjected to hard coating treatment in order to enhance properties such as an anti-curling property, a mar resistance and a surface hardness thereof, etc. Also, as a base material for the film, there has been generally used a polyester film that is excellent in transparency and mechanical properties. In order to enhance adhesion between the polyester film and a hard coat layer formed thereon, a coating layer having an easy-bonding property is generally provided as an intermediate layer therebetween. In this case, rainbow-like optical unevenness (interference fringes) tends to be caused by interference between a reflection light from one surface of the hard coat layer and a reflection light from the opposite surface thereof.

When using the films having interference fringes in displays such as touch panels, the displays tend to exhibit a poor visibility, resulting in difficulty in handling thereof upon use. For this reason, it has been required to provide a film that suffers from less occurrence of interference fringes. It is considered that in order to suppress occurrence of interference fringes, the refractive index of the coating layer is present near a geometrical mean value of a refractive index of the biaxially oriented polyester film as the base material and a refractive index of the hard coat layer. Therefore, it is ideally required to adjust the refractive index of the coating layer near to the geometrical mean value. In this case, since the polyester film has a high refractive index, it has been generally required that the coating layer is designed to have a high refractive index.

As the method of enhancing a refractive index of the coating layer to improve interference fringes, there is known, for example, the method in which a metal chelate compound having a high refractive index or metal fine particles are compounded in the coating layer. However, in the case where the chelate compound is compounded in the coating layer, owing to unstableness of the metal chelate compound in an aqueous solution, a coating solution used therefor also tends to become unstable according to combination between the compound and resin therein, so that the frequency of conducting replacement of the coating solution with new one tends to be increased when the film production process is continuously performed for a long period of time (Patent Document 1). In addition, there is also known, for example, the method of enhancing a refractive index of such a coating layer by specific combination of a polyester resin and metal fine particles. However, in such a case, there still tends to occur such a case in which the current strict requirement as to wet heat-resistant adhesion of the polyester film which has been recently required is not satisfied to a sufficient extent (Patent Documents 2 and 3).

Further, in order to not only suppress occurrence of interference fringes but also improve a visibility of displays, there is an increasing demand for a coating layer having a high refractive index. For example, in recent years, with the spread of so-called smart phones, etc., among various touch panels, those touch panels of an electrostatic capacity type in which a patterned transparent electrode is provided are becoming dominant. For the purpose of improving a visibility of displays, it has been required to conduct the processing step in which the difference in refractive index between respective layers of the displays is reduced to render patterning of the transparent electrode unvisible (Patent Documents 4 and 5).

### CITATION LIST

### PATENT LITERATURE

Patent Document 1: Japanese Patent Application Laid-Open (KOKAI) No. 2005-97571
Patent Document 2: Japanese Patent Application Laid-Open (KOKAI) No. 2004-54161
Patent Document 3: Japanese Patent Application Laid-Open (KOKAI) No. 2008-169277
Patent Document 4: Japanese Patent Application Laid-Open (KOKAI) No. 2011-134464
Patent Document 5: Japanese Patent Application Laid-Open (KOKAI) No. 2011-136562

### SUMMARY OF THE INVENTION

### Problems to be Solved by the Invention

The present invention has been accomplished in view of the above conventional problems. An object of the present invention is to provide a coated film that suffers from less occurrence of interference fringes when forming various surface functional layers such as a hard coat layer thereon, and can exhibit a good visibility and an excellent adhesion property to the surface functional layers.

As a result of the present inventors' earnest study in view of the above problems, it has been found that these problems can be readily solved by using a coated film having a specific structure. The present invention has been attained on the basis of this finding.

That is, in an aspect of the present invention, there is provided a coated film comprising:
a polyester film,
a first coating layer formed on one surface of the polyester film which is prepared from a coating solution comprising a polyester resin, titanium oxide and an epoxy compound, and
a second coating layer formed on the other surface of the polyester film which is prepared from a coating solution comprising a metal oxide and two or more crosslinking agents and which has an absolute reflectance having one minimum value in a wavelength range of 400 to 800 nm, and which has the absolute reflectance at the minimum value of not less than 4.0%.

### Effect of the Invention

In accordance with the present invention, there can be provided a coated film that can be prevented from suffering from occurrence of interference fringes owing to reflection of external light when various surface functional layers such as a hard coat layer are laminated thereon, and is excellent in adhesion property to the various surface functional layers. Therefore, the present invention has a high industrial value.

### PREFERRED EMBODIMENTS FOR CARRYING OUT THE INVENTION

The polyester film constituting the coated film of the present invention may have either a single layer structure or a multilayer structure. Unless departing from the scope of the present invention, the polyester film may have not only a two or three layer structure but also a four or more multilayer structure, and the layer structure of the polyester film is not particularly limited.

The polyester for the polyester film may be either a homopolyester or a copolyester. The homopolyester is preferably obtained by polycondensing an aromatic dicarboxylic acid and an aliphatic glycol. Examples of the aromatic dicarboxylic acid include terephthalic acid and 2,6-naphthalenedicarboxylic acid. Examples of the aliphatic glycol include ethylene glycol, diethylene glycol and 1,4-cyclohexanedimethanol. Typical examples of the polyesters include polyethylene terephthalate or the like. On the other hand, as a dicarboxylic acid component of the copolyester, there may be mentioned one or more compounds selected from the group consisting of isophthalic acid, phthalic acid, terephthalic acid, 2,6-naphthalenedicarboxylic acid, adipic acid, sebacic acid and oxycarboxylic acids (such as, for example, p-oxybenzoic acid). As a glycol component of the copolyester, there may be mentioned one or more compounds selected from the group consisting of ethylene glycol, diethylene glycol, propylene glycol, butanediol, 4-cyclohexanedimethanol and neopentyl glycol.

The polymerization catalyst for production of the polyester is not particularly limited, and any conventionally known compounds may be used as the polymerization catalyst. Examples of the polymerization catalyst include an antimony compound, a titanium compound, a germanium compound, a manganese compound, an aluminum compound, a magnesium compound and a calcium compound. Among these compounds, in particular, from the standpoint of a high brightness of the resulting film, preferred is the titanium compound.

The polyester film may also comprise an ultraviolet absorber in order to improve a weathering resistance of the film and prevent deterioration in liquid crystals and the like. The ultraviolet absorber is not particularly limited as long as it is a compound capable of absorbing an ultraviolet ray and withstanding heat applied during a process for producing the polyester film.

As the ultraviolet absorber, there are generally known an organic ultraviolet absorber and an inorganic ultraviolet absorber. In view of a good transparency of the resulting film, among these ultraviolet absorbers, the organic ultraviolet absorber is preferred. Examples of the organic ultraviolet absorber include, but are not particularly limited to, cyclic iminoester-based ultraviolet absorbers, benzotriazole-based ultraviolet absorbers and benzophenone-based ultraviolet absorbers. Among these organic ultraviolet absorbers, cyclic iminoester-based ultraviolet absorbers and benzotriazole-based ultraviolet absorbers are preferred in view of a good durability. These ultraviolet absorbers may be used in combination of any two or more thereof.

For the purpose of mainly imparting an easy-slipping property to the polyester film and preventing occurrence of flaws on the polyester film in the respective steps, the polyester film may also comprise particles. The kinds of the particles compounded in the polyester film are not particularly limited as long as they are capable of imparting a easy-slipping property to the film. Specific examples of the particles include inorganic particles such as particles of silica, calcium carbonate, magnesium carbonate, barium carbonate, calcium sulfate, calcium phosphate, magnesium phosphate, kaolin, aluminum oxide and titanium oxide; and organic particles such as particles of acrylic resins, styrene resins, urea resins, phenol resins, epoxy resins and benzoguanamine resins. Further, there may also be used deposited particles obtained by precipitating and finely dispersing a part of metal compounds such as a catalyst during the process for production of the polyester.

The shape of the particles used in the polyester film is also not particularly limited, and may be any of a spherical shape, a massive shape, a bar shape, a flat shape, etc. Further, the hardness, specific gravity, color and the like of the particles are also not particularly limited. These particles may be used in combination of any two or more kinds thereof, if required.

The average particle diameter of the particles used in the polyester film is usually in the range of 0.01 to 3 µm. When the average particle diameter of the particles is less than 0.01 µm, the particles tend to fail to impart a sufficient easy-slipping property to the film, tends to be aggregated together and therefore fail to exhibit a sufficient dispersibility therein, or tends to cause deterioration in transparency of the film. On the other hand, when the average particle diameter of the particles is more than 3 µm, the obtained film tends to have an excessively coarse surface roughness, so that problems or defects tend to occur upon forming various surface functional layers such as a hard coat layer on the polyester film in the subsequent steps.

The content of the particles in the polyester film is usually less than 5% by weight and preferably in the range of 0.0005 to 3% by weight. When the polyester film comprises no particles or the content of the particles in the polyester film is excessively small, the resulting film exhibits a high transparency and therefore might provide a good film, but tends to be insufficient in slip property.
As a result, it would be required to take any measure for enhancing a slip property of the film by incorporating particles into the coating layer formed thereon, etc. On the other hand, when the content of the particles added in the polyester film is more than 5% by weight, the resulting film tends to be insufficient in transparency.

The method of adding the particles to the polyester film is not particularly limited, and any conventionally known methods can be suitably used therefor. For example, the particles may be added at any optional stages in the process for producing the polyester forming the respective layers. The particles are preferably added to the polyester after completion of the esterification reaction or transesterification reaction.

In addition, there may also be used the method of blending a slurry of the particles prepared by dispersing the particles in ethylene glycol or water with the raw polyester material using a vented kneading extruder, the method of blending the dried particles with the raw polyester material using a kneading extruder, or the like.

Meanwhile, the above polyester film may also comprise, in addition to the above particles, known additives such as an antioxidant, an antistatic agent, a thermal stabilizer, a lubricant, a dye, a pigment, etc., if required.

The thickness of the polyester film is not particularly limited, and the polyester film may have any thickness as long as it can be produced while maintaining a suitable film shape. The thickness of the polyester film is usually in the range of 10 to 350 µm and preferably 25 to 250 µm.

Next, an example of the process of producing the polyester film used in the present invention is more specifically explained, although the present invention is not particularly limited thereto. That is, in the production process, there is preferably used such a method in which the above-mentioned raw polyester material is extruded from a die in the form of a molten sheet, and the molten sheet is cooled and solidified on a chilled roll to obtain an undrawn sheet. In this case, in order to enhance a flatness of the obtained sheet, it is preferred to enhance adhesion between the sheet and the rotary chilled drum. For this purpose, an electrostatic pinning method or a liquid coating adhesion method is preferably used. Next, the thus obtained undrawn sheet is biaxially drawn. In such a case, the undrawn sheet is first drawn in one direction thereof using a roll-type or tenter-type drawing machine. The drawing temperature is usually 70 to 120°C and preferably 80 to 110°C, and the draw ratio is usually 2.5 to 7 times and preferably 3.0 to 6 times. Next, the thus drawn film is further drawn in the direction perpendicular to the drawing direction of the first stage. In this case, the drawing temperature is usually 70 to 170°C, and the draw ratio is usually 3.0 to 7 times and preferably 3.5 to 6 times. Successively, the resulting biaxially drawn sheet is heat-set at a temperature of 180 to 270°C under a tension or under relaxation within 30% to obtain a biaxially oriented film. Upon the above drawing steps, there may also be used the method in which the drawing in each direction is carried out in two or more stages. In such a case, the multi-stage drawing is preferably performed such that the total draw ratio in each of the two directions finally falls within the above-specified range.

Also, upon producing the polyester film, there may also be used a simultaneous biaxial drawing method. The simultaneous biaxial drawing method is such a method in which the above undrawn sheet is drawn and oriented in both of the machine and width directions at the same time while maintaining the sheet in a suitable temperature-controlled condition at a temperature of usually 70 to 120°C and preferably 80 to 110°C. The draw ratio used in the simultaneous biaxial drawing method is 4 to 50 times, preferably 7 to 35 times and more preferably 10 to 25 times in terms of an area ratio of the sheet to be drawn. Successively, the obtained biaxially drawn sheet is heat-set at a temperature of 170 to 250°C under a tension or under relaxation within 30% to obtain a drawn oriented film. As the apparatus used in the above simultaneous biaxial drawing method, there may be employed any conventionally known drawing apparatuses such as a screw type drawing apparatus, a pantograph type drawing apparatus and a linear drive type drawing apparatus.

Next, the method of forming the coating layer constituting the coated film according to the present invention is explained. The coating layer may be formed either by an in-line coating method in which the surface of the polyester film is subjected to coating treatment during the film-forming step of the polyester film, or by an off-line coating method in which the polyester film produced is once transferred to an outside of the film production system and subjected to coating treatment. Among these methods, the in-line coating method is preferably used because the coating layer can be produced simultaneously with formation of the polyester film, and therefore the film can be produced at low costs.

For example, in the case of a sequential biaxial drawing process, the in-line coating treatment may be carried out, in particular, after completion of the longitudinal drawing but before initiation of the lateral drawing, although the present invention is not particularly limited thereto. When the coating layer is formed on the polyester film by the in-line coating method, the coating can be carried out simultaneously with formation of the polyester film, and the coating layer can be treated at a high temperature when subjecting the drawn polyester film to the heat-setting step, so that the resulting coated film can be enhanced in performance such as an adhesion property to various surface functional layers to be formed on the coating layer as well as a wet heat resistance of the resulting film, etc. Also, when the coating step is conducted before drawing the polyester film, the thickness of the coating layer may be changed by adjusting a draw ratio of the film, so that the thin-film coating step can be more easily conducted as compared to the off-line coating method. Thus, by using the in-line coating method, in particular, by conducting the in-line coating method before the drawing, it is possible to produce a film suitable as the polyester film used in the present invention.

It is essentially required that the coated film of the present invention comprises the polyester film, a first coating layer formed on one surface of the polyester film which is prepared from a coating solution comprising a polyester resin, titanium oxide and an epoxy compound, and a second coating layer formed on the other surface of the polyester film which is prepared from a coating solution comprising a metal oxide and two or more crosslinking agents, in which the second coating layer has an absolute reflectance having one minimum value in a wavelength range of 400 to 800 nm, and the absolute reflectance at the minimum value is not less than 4.0%.

The first coating layer is designed such that in the case where a surface functional layer such as a hard coat layer is formed thereon, a refractive index of the surface functional layer such as a hard coat layer and a refractive index of the coating layer are similar or close to a refractive index of the biaxially drawn polyester film in order to enhance a visibility of the resulting film. By controlling refractive indices of these layers to be similar or close to the refractive index of the polyester film, it is possible to prevent reflection of light at each boundary therebetween, so that occurrence of interference fringes can be highly reduced.

Further, in recent years, with the spread of so-called smart phones, etc., among various touch panels, those touch panels of an electrostatic capacity type in which a patterned transparent electrode is provided are becoming dominant. For the purpose of improving a visibility of display screens, it has been required to conduct a processing step for reducing occurrence of interference fringes and rendering patterning of the transparent electrode unvisible. Upon the processing step, a surface functional layer having a high refractive index has been frequently provided on the polyester film as the base material. It has been considered by the present inventors that when controlling a refractive index of the coating layer to be similar or close to refractive indices of the surface functional layer such as a hard coat layer and the biaxially drawn polyester film as the base material, it is possible to effectively reduce occurrence of interference fringes and render patterning of the transparent electrode unvisible.

The polyester resins used for forming the first coating layer may be those polyester resins produced, for example, from the following polycarboxylic acids and polyhydroxy compounds as main constituents.

More specifically, as the polycarboxylic acids, there may be used terephthalic acid, isophthalic acid, orthophthalic acid, phthalic acid, 4,4'-diphenyldicarboxylic acid, 2,5-naphthalenedicarboxylic acid, 1,5-naphthalenedicarboxylic acid, 2,6-naphthalenedicarboxylic acid, 2,7-naphthalenedicarboxylic acid, 1,4-cyclohexanedicarboxylic acid, 2-potassium sulfo-terephthalic acid, 5-sodium sulfo-isophthalic acid, adipic acid, azelaic acid, sebacic acid, dodecanedicarboxylic acid, glutaric acid, succinic acid, trimellitic acid, trimesic acid, pyromellitic acid, trimellitic anhydride, phthalic anhydride, p-hydroxybenzoic acid, trimellitic acid monopotassium salt and ester-forming derivatives thereof. Among these polycarboxylic acids, those polycarboxylic acids having a naphthalene structure are preferred because they are capable of highly suppressing occurrence of interference fringes by increasing a refractive index of the first coating layer and controlling the refractive index of the first coating layer to be similar or close to refractive indices of the surface functional layer such as a hard coat layer and the polyester film as the base material.

Examples of the polyhydroxy compounds include ethylene glycol, 1,2-propylene glycol, 1,3-propylene glycol, 1,3-propanediol, 1,4-butanediol, 1,6-hexanediol, 2-methyl-1,5-pentanediol, neopentyl glycol, 1,4-cyclohexane dimethanol, p-xylylene glycol, ethylene glycol-modified bisphenol A, diethylene glycol-modified bisphenol A, diethylene glycol, triethylene glycol, polyethylene glycol, polypropylene glycol, polytetramethylene glycol, polytetramethylene oxide glycol, dimethylol propionic acid, glycerin, trimethylol propane, sodium dimethylol ethyl sulfonate and potassium dimethylol propionate. The polyester resins may be synthesized by subjecting one or more compounds appropriately selected from the aforementioned polycarboxylic acids and one or more compounds appropriately selected from the aforementioned polyhydroxy compounds to polycondensation reaction by an ordinary method.

Upon forming the first coating layer, in order to enhance adhesion of the coating layer to the surface functional layer and surface conditions of the coating layer and improve a visibility or a transparency of the resulting film when forming the surface functional layer on the coating layer, polymers other than the above polyester resin may be further used in combination therewith.

Specific examples of the polymers include acrylic resins, urethane resins, polyvinyl resins (such as polyvinyl alcohol, polyvinyl chloride and vinyl chloride-vinyl acetate copolymers), polyalkylene glycols, polyalkylene imines, methyl cellulose, hydroxy cellulose, starches, etc.

The titanium oxide particles for forming the first coating layer are used mainly for controlling a refractive index of the coating layer. Titanium oxide has a high refractive index and therefore can enhance a refractive index of the coating layer without deterioration in transparency of the resulting film. In particular, since the resin used in the coating layer has a low refractive index, the use of titanium oxide having a high refractive index is preferred. In order to obtain the coating layer having a refractive index that is similar or close to that of the polyester film, there is preferably used titanium oxide having a refractive index of not less than 1.8. If required, two or more kinds of titanium oxide particles may be used in combination with each other.

From the standpoint of a good transparency of the resulting film, the titanium oxide particles preferably have an average particle diameter of not more than 100 nm, more preferably not more than 50 nm, still more preferably not more than 25 nm and further still more preferably not more than 15 nm. In addition, in order to improve a slip property and an anti-blocking property of the resulting film, particles other than the titanium oxide particles may also be used in combination therewith for forming the first coating layer.

Examples of the epoxy compound used in the first coating layer include condensates of epichlorohydrin with a hydroxyl group of ethylene glycol, polyethylene glycol, glycerol, polyglycerol, bisphenol A, etc., or an amino group. Examples of the epoxy compound include polyepoxy compounds, diepoxy compounds, monoepoxy compounds and glycidyl amine compounds. Specific examples of the polyepoxy compounds include sorbitol polyglycidyl ether, polyglycerol polyglycidyl ether, pentaerythritol polyglycidyl ether, diglycerol polyglycidyl ether, triglycidyl tris(2-hydroxyethyl)isocyanate, glycerol polyglycidyl ether and trimethylolpropane polyglycidyl ether. Specific examples of the diepoxy compounds include neopentyl glycol diglycidyl ether, 1,6-hexanediol diglycidyl ether, resorcin diglycidyl ether, ethylene glycol diglycidyl ether, polyethylene glycol diglycidyl ether, propylene glycol diglycidyl ether, polypropylene glycol diglycidyl ether and polytetramethylene glycol diglycidyl ether. Specific examples of the monoepoxy compounds include allyl glycidyl ether, 2-ethylhexyl glycidyl ether and phenyl glycidyl ether. Specific examples of the glycidyl amine compounds include N,N,N',N'-tetraglycidyl-m-xylylenediamine, 1,3-bis(N,N-diglycidylamino)cyclohexane and reaction products thereof. These epoxy compounds may be used alone or in combination of any two or more thereof.

Further, upon forming the first coating layer, various crosslinking agents other than the above epoxy compounds may be used in combination therewith unless addition thereof adversely affects the effects of the present invention. As the crosslinking agents other than the epoxy compounds, there may be used any conventionally known crosslinking agents. Examples of the conventionally known crosslinking agents other than the epoxy compounds include an oxazoline compound, an isocyanate-based compound, a melamine compound, a carbodiimide-based compound, etc., and a silane coupling compound. Among these compounds, when using the epoxy compound in combination with the oxazoline compound or isocyanate-based compound, it is expected to enhance an adhesion property of the resulting coating layer.

As the oxazoline compound, there are preferably used, in particular, polymers having an oxazoline group which may be produced in the form of a homopolymer of an addition-polymerizable oxazoline group-containing monomer or a copolymer of the addition-polymerizable oxazoline group-containing monomer with the other monomer. Examples of the addition-polymerizable oxazoline group-containing monomer include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline. These addition-polymerizable oxazoline group-containing monomers may be used alone or in the form of a mixture of any two or more thereof. Among these addition-polymerizable oxazoline group-containing monomers, 2-isopropenyl-2-oxazoline is more preferred because of good industrial availability thereof. The other monomers used in the copolymer are not particularly limited as long as they are copolymerizable with the addition-polymerizable oxazoline group-containing monomer. Examples of the other monomers include (meth)acrylic acid esters such as alkyl (meth)acrylates (in which the alkyl group may be methyl, ethyl, n-propyl, isopropyl, n-butyl, isobutyl, t-butyl, 2-ethylhexyl or cyclohexyl); unsaturated carboxylic acids such as acrylic acid, methacrylic acid, itaconic acid, maleic acid, fumaric acid, crotonic acid, styrenesulfonic acid and salts thereof (such as sodium salts, potassium salts, ammonium salts and tertiary amine salts); unsaturated nitriles such as acrylonitrile and methacrylonitrile; unsaturated amides such as (meth)acrylamide, N-alkyl (meth)acrylamide and N,N-dialkyl (meth)acrylamide (in which the alkyl group may be methyl, ethyl, n-propyl, isopropyl, n-butyl, isobutyl, t-butyl, 2-ethylhexyl or cyclohexyl); vinyl esters such as vinyl acetate and vinyl propionate; vinyl ethers such as methyl vinyl ether and ethyl vinyl ether; α-olefins such as ethylene and propylene; halogen-containing α,β-unsaturated monomers such as vinyl chloride, vinylidene chloride and vinyl fluoride; and α,β-unsaturated aromatic monomers such as styrene and α-methyl styrene. These other monomers may be used alone or in combination of any two or more thereof.

The isocyanate-based compound means an isocyanate or a compound having an isocyanate derivative structure such as typically a blocked isocyanate. Examples of the isocyanate include aromatic isocyanates such as tolylene diisocyanate, xylylene diisocyanate, methylene diphenyl diisocyanate, phenylene diisocyanate and naphthalene diisocyanate; aromatic ring-containing aliphatic isocyanates such as α,α,α',α'-tetramethyl xylylene diisocyanate; aliphatic isocyanates such as methylene diisocyanate, propylene diisocyanate, lysine diisocyanate, trimethyl hexamethylene diisocyanate and hexamethylene diisocyanate; and alicyclic isocyanates such as cyclohexane diisocyanate, methyl cyclohexane diisocyanate, isophorone diisocyanate, methylene-bis(4-cyclohexyl isocyanate) and isopropylidene dicyclohexyl diisocyanate. Further examples of the isocyanate include polymers and derivatives of these isocyanates such as biuret compounds, isocyanurate compounds, uretdione compounds and carbodiimide-modified compounds of these isocyanates. These isocyanates may be used alone or in combination of any two or more thereof. Among these isocyanates, from the viewpoint of preventing occurrence of yellowing owing to ultraviolet radiation, aliphatic isocyanates and alicyclic isocyanates are more suitably used as compared to aromatic isocyanates.

When the isocyanate compound is used in the form of a blocked isocyanate, examples of blocking agents used for production thereof include bisulfites; phenol-based compounds such as phenol, cresol and ethyl phenol; alcohol-based compounds such as propylene glycol monomethyl ether, ethylene glycol, benzyl alcohol, methanol and ethanol; active methylene-based compounds such as dimethyl malonate, diethyl malonate, methyl acetoacetate, ethyl acetoacetate and acetyl acetone; mercaptan-based compounds such as butyl mercaptan and dodecyl mercaptan; lactam-based compounds such as ε-caprolactam and 8-valerolactam; amine-based compounds such as diphenyl aniline, aniline and ethylene imine; acid amide compounds such as acetanilide and acetic acid amide; and oxime-based compounds such as formaldehyde, acetaldoxime, acetone oxime, methyl ethyl ketone oxime and cyclohexanone oxime. These blocking agents may be used alone or in combination of any two or more thereof.

In addition, the above isocyanate-based compounds may be used in the form of a single substance or in the form of a mixture with various polymers or a bonded product therewith. The isocyanate-based compounds are preferably used in the form of a mixture or a bonded product with polyester resins or urethane resins from the standpoint of improving a dispersibility or a crosslinking reactivity of the isocyanate-based compounds.

Examples of the melamine compounds include alkylolated melamine derivatives, partially or completely etherified compounds obtained by reacting the alkylolated melamine derivative with an alcohol, and mixtures of these compounds. Examples of the alcohol suitably used for the above etherification include methyl alcohol, ethyl alcohol, isopropyl alcohol, n-butanol and isobutanol. The melamine compound may be in the form of either a monomer or a dimer or higher polymer, or may be in the form of a mixture thereof. In addition, there may also be used those compounds obtained by co-condensing a urea or the like to a part of melamine. Further, a catalyst may also be used to enhance a reactivity of the melamine compound.

The carbodiimide-based compound is used, in particular, for enhancing an adhesion property of the coating layer, etc. The preferred carbodiimide-based compound includes a polycarbodiimide compound comprising two or more carbodiimide structures or carbodiimide derivative structures in a molecule thereof.

The carbodiimide-based compound may be synthesized by conventionally known techniques. In general, the carbodiimide-based compound may be obtained by a condensation reaction of a diisocyanate compound. The diisocyanate compound is not particularly limited, and may be either an aromatic diisocyanate or an aliphatic diisocyanate. Specific examples of the diisocyanate compound include tolylene diisocyanate, xylene diisocyanate, diphenylmethane diisocyanate, phenylene diisocyanate, naphthalene diisocyanate, hexamethylene diisocyanate, trimethyl hexamethylene diisocyanate, cyclohexane diisocyanate, methyl cyclohexane diisocyanate, isophorone diisocyanate, dicyclohexyl diisocyanate and dicyclohexylmethane diisocyanate.

Further, in order to improve a water solubility or a water dispersibility of the polycarbodiimide-based compound, a surfactant or a hydrophilic monomer such as a polyalkyleneoxide, a quaternary ammonium salt of a dialkylamino alcohol and a hydroxyalkyl sulfonic acid salt may be added thereto unless the addition thereof eliminates the effects of the present invention.

Meanwhile, these crosslinking agents are used for improving a performance of the coating layer by allowing the crosslinking agents to react with the compounds contained therein during a drying step or a film-forming step of the coating layer. Therefore, it is estimated that the resulting coating layer comprises the unreacted crosslinking agents, compounds obtained after the reaction, or a mixture thereof.

The second coating layer exhibits a good adhesion property to various surface functional layers such as a hard coat layer and is well controlled in refractive index in order to suppress occurrence of interference fringes owing to external light when forming the surface functional layers on the coating layer, and may be designed such that the refractive index thereof is adjusted to be present in the vicinity of a geometrical mean value of refractive indices of the polyester film as the base material and the surface functional layer such as a hard coat layer.

The metal oxide for forming the second coating layer is used mainly for the purpose of controlling a refractive index of the coating layer. In particular, since the resin used in the coating layer has a low refractive index, the use of the metal oxide having a high refractive index is preferred, and the use of the metal oxide having a refractive index of not less than 1.7 is more preferred. Specific examples of the metal oxide include zirconium oxide, titanium oxide, tin oxide, yttrium oxide, antimony oxide, indium oxide, zinc oxide, antimony tin oxide and indium tin oxide. These metal oxides may be used alone or in combination of any two or more thereof. Among these metal oxides, preferred are zirconium oxide and titanium oxide.

The metal oxide tends to have a fear of causing deterioration in adhesion property of the coating layer depending upon its configuration upon use. Therefore, the metal oxide is preferably used in the form of particles. In addition, from the standpoint of a good transparency of the coating layer, the average particle diameter of the metal oxide is preferably not more than 100 nm, more preferably not more than 50 nm, and still more preferably not more than 25 nm.

The two or more crosslinking agents are used for the purpose of enhancing an adhesion property of the coating layer to a surface functional layer such as a hard coat layer to be formed on the coating layer. It has been found that even by incorporating only one kind of crosslinking agent in the coating layer, it was possible to enhance an adhesion property of the coating layer. In addition, it has been found that by using combination of two or more crosslinking agents, the resulting coating layer is further improved in adhesion property, in particular, improved in adhesion property after subjected to a wet heat test.

Examples of the crosslinking agent include an epoxy compound, an oxazoline compound, a melamine compound, an isocyanate-based compound, a carbodiimide-based compound and a silane coupling compound. Among these crosslinking agents, in view of a good adhesion property of the resulting coating layer, especially preferred is an oxazoline compound or an epoxy compound, and it is more preferred that an oxazoline compound and an epoxy compound are used in combination with each other.

As the epoxy compound, the oxazoline compound, the melamine compound, the isocyanate-based compound and the carbodiimide-based compound which are used for forming the second coating layer, there may be respectively used various compounds as described with respect to the first coating layer.

Upon forming the second coating layer, in order to improve a coating appearance of the obtained coating layer, prevent occurrence of interference fringes when laminating various surface functional layers such as a hard coat layer on the coating layer, and enhance a transparency and an adhesion property thereof, various polymers are preferably further used in combination therein.

Specific examples of the various polymers include polyester resins, acrylic resins, urethane resins, polyvinyl resins (such as polyvinyl alcohol, polyvinyl chloride and vinyl chloride-vinyl acetate copolymers), polyalkylene glycols, polyalkylene imines, methyl cellulose, hydroxy cellulose, starches, etc. Among these polymers, in view of improving an adhesion property of the coating layer to the surface functional layers such as a hard coat layer and enhancing an appearance of the coating surface, preferred are polyester resins, acrylic resins and urethane resins.
In addition, more preferred are polyester resins from such a viewpoint that a large number of aromatic compounds such as benzene ring-containing compounds can be incorporated in a molecule of the polyester resins to thereby enhance a refractive index of the resulting polyester resins.

In addition, in order to further readily control a refractive index of the coating layer, it is preferable to use a compound having a condensed polycyclic aromatic structure as shown in the following formulae, such as naphthalene, anthracene, phenanthrene, naphthacene, benzo[a]anthracene, benzo[a]phenanthrene, pyrene, benzo[c]phenanthrene and perylene in combination with the above polymers in the coating layer.

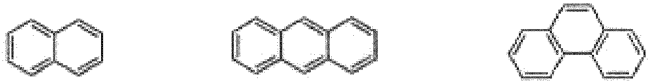

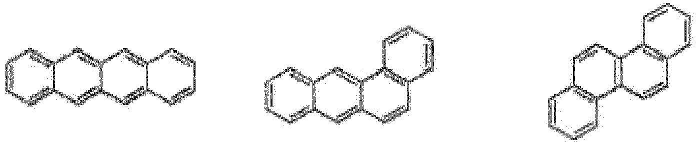

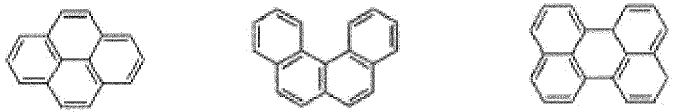

In view of a good coatability on the polyester film, the compound having a condensed polycyclic aromatic structure is preferably in the form of a polymer compound, for example, such as a polyester resin, an acrylic resin or a urethane resin. Among these resins, the polyester resin is more preferred because a larger number of the condensed polycyclic aromatic structures can be introduced into the polyester resin.

As the method of incorporating the condensed polycyclic aromatic structure into the polyester resin, there may be used, for example, the method of introducing two or more hydroxyl groups as substituent groups into the condensed polycyclic aromatic structure to provide a diol component or a polyhydroxyl group component, or the method of introducing two or more carboxyl groups as substituent groups into the condensed polycyclic aromatic structure to provide a dicarboxylic acid component or a polycarboxylic acid component.

From the standpoint of hardly suffering from undesirable coloration during the process for producing the coated film, compounds having a naphthalene skeleton are preferably used as the compound having a condensed polycyclic aromatic structure to be incorporated in the coating layer. Also, in view of a good adhesion property of the coating layer to various surface functional layers formed on the coating layer and a good transparency of the resulting film, those resins into which the naphthalene skeleton is incorporated as a constituent of the polyester can be suitably used. Typical examples of the naphthalene skeleton include 1,5-naphthalenedicarboxylic acid, 2,6-naphthalenedicarboxylic acid and 2,7-naphthalenedicarboxylic acid.

Meanwhile, not only the above hydroxyl group or carboxyl group, but also a substituent group comprising a sulfur element, an aromatic substituent group such as a phenyl group, a halogen element group or the like may be introduced into the condensed polycyclic aromatic structure, whereby it is expected to enhance a refractive index of the resulting coating layer. From the viewpoint of a good coatability and a good adhesion property, the substituent group such as an alkyl group, an ester group, an amide group, a sulfonic group, a carboxyl group and a hydroxyl group may be introduced into the condensed polycyclic aromatic structure.

Also, for the purpose of improving a fixing property and a slipping property of the second coating layer, particles other than the above metal oxide may be used in the second coating layer. The average particle diameter of the particles is usually not more than 1.0 µm, preferably not more than 0.5 µm and more preferably not more than 0.2 µm from the viewpoint of a good transparency of the resulting film. Specific examples of the particles used in the second coating layer include silica, alumina, kaolin, calcium carbonate, organic particles or the like.

Further, the first coating layer and the second coating layer may also respectively comprise various additives such as a defoaming agent, a coatability improver, a thickening agent, an organic lubricant, an antistatic agent, an ultraviolet absorber, an antioxidant, a foaming agent, a dye and a pigment, if required, unless the subject matter of the present invention is adversely affected by the addition thereof.

The content of the polyester resin in the coating solution forming the first coating layer is usually in the range of 10 to 90% by weight and preferably 40 to 85% by weight based on a total weight of whole non-volatile components in the coating solution. When the content of the polyester resin in the coating solution lies within the above-specified range, the obtained coating layer can be readily controlled in refractive index, so that upon forming a surface functional layer such as a hard coat layer on the coating layer, occurrence of interference fringes can be readily suppressed. On the other hand, when the content of the polyester resin in the coating solution is out of the above-specified range, the obtained coating layer tends to be deteriorated in adhesion to the surface functional layer.

The content of the titanium oxide particles in the coating solution forming the first coating layer is usually in the range of 5 to 60% by weight, preferably 8 to 50% by weight and more preferably 20 to 40% by weight based on a total weight of whole non-volatile components in the coating solution. When the content of the titanium oxide particles in the coating solution is less than 5% by weight, the obtained coating layer may fail to exhibit a sufficiently high refractive index, so that the resulting film tends to be hardly prevented from suffering from occurrence of interference fringes. When the content of the titanium oxide particles in the coating solution is more than 60% by weight, the obtained coating layer tends to be deteriorated in haze.

The content of the epoxy compound in the coating solution forming the first coating layer is usually in the range of 1 to 50% by weight, preferably 5 to 30% by weight and more preferably 10 to 20% by weight based on a total weight of whole non-volatile components in the coating solution. When the content of the epoxy compound in the coating solution is less than 1% by weight, there tends to occur such a fear that the obtained coating layer is deteriorated in adhesion property to a surface functional layer such as a hard coat layer. When the content of the epoxy compound in the coating solution is more than 50% by weight, the obtained coating layer tends to be deteriorated in haze.

The content of the metal oxide in the coating solution forming the second coating layer is usually in the range of 3 to 70% by weight, preferably 5 to 50% by weight, more preferably 5 to 40% by weight and still more preferably 8 to 30% by weight based on a total weight of whole non-volatile components in the coating solution. When the content of the metal oxide in the coating solution is less than 3% by weight, the obtained coating layer may fail to exhibit a sufficiently high refractive index, so that the resulting film tends to be hardly prevented from suffering from occurrence of interference fringes. When the content of the metal oxide in the coating solution is more than 70% by weight, the obtained coating layer tends to be deteriorated in transparency.

The content of the two or more crosslinking agents in the coating solution forming the second coating layer is usually in the range of 2 to 80% by weight, preferably 4 to 60% by weight and more preferably 10 to 40% by weight based on a total amount of whole non-volatile components in the coating solution. When the content of the crosslinking agents in the coating solution is out of the above-specified range, there tends to occur such a fear that the resulting coating layer is deteriorated in adhesion property to a surface functional layer such as a hard coat layer, the coating layer tends to be deteriorated in coating appearance, or the resulting film tends to be deteriorated in visibility owing to occurrence of interference fringes after forming the surface functional layer such as a hard coat layer on the coating layer.

In the case where an oxazoline compound is used as the crosslinking agent, the content of the oxazoline compound in the coating solution forming the second coating layer is usually 1 to 50% by weight, preferably 1 to 30% by weight and more preferably 3 to 20% by weight based on a total amount of whole non-volatile components in the coating solution. When the content of the oxazoline compound in the coating solution is less than 1% by weight, there tends to occur such a fear that the obtained coating layer is deteriorated in adhesion property to a surface functional layer such as a hard coat layer. When the content of the oxazoline compound in the coating solution is more than 50% by weight, the obtained coating layer tends to exhibit a low refractive index, so that the resulting film tends to be deteriorated in visibility owing to occurrence of interference fringes after forming a surface functional layer such as a hard coat layer on the coating layer.

In the case where an epoxy compound is used as the crosslinking agent, the content of the epoxy compound in the coating solution forming the second coating layer is usually 1 to 50% by weight, preferably 3 to 30% by weight and more preferably 5 to 20% by weight based on a total amount of whole non-volatile components in the coating solution. When the content of the epoxy compound in the coating solution is out of the above-specified range, there tends to occur such a fear that the obtained coating layer is deteriorated in adhesion property to a surface functional layer such as a hard coat layer, or the coating layer tens to be deteriorated in coating appearance.

The content of the condensed polycyclic aromatic structure in the compound having a condensed polycyclic aromatic structure is usually 5 to 80% by weight and preferably 10 to 60% by weight. In the case where the compound having a condensed polycyclic aromatic structure is used for forming the coating layer, the content of the compound having a condensed polycyclic aromatic structure in the coating solution for forming the coating layer is usually 5 to 80% by weight, preferably 5 to 70% by weight and more preferably 10 to 50% by weight based on a total amount of whole non-volatile components in the coating solution. When the compound having a condensed polycyclic aromatic structure is used within such a specific range, the refractive index of the coating layer can be readily adjusted, and the coating layer can be readily prevented from suffering from occurrence of interference fringes after forming a surface functional layer such as a hard coat layer on the coating layer. Meanwhile, the content of the condensed polycyclic aromatic structure in the compound having a condensed polycyclic aromatic structure may be determined as follows. That is, the coating layer is dissolved and extracted, for example, in a suitable solvent or warm water, and the obtained extract is fractionated by chromatography and subjected to structural analysis by NMR
or IR, and further subjected to pyrolysis GC-MS (gas chromatography-mass spectrometry), an optical analysis or the like to thereby determine the content of the condensed polycyclic aromatic structure in the compound.

The analysis of various components contained in the coating layer may be conducted, for example, by analysis method such as TOF-SIMS, ESCA and fluorescent X-ray analysis.

When forming the coating layer by the in-line coating method, the coated film is preferably produced by the method in which an aqueous solution or a water dispersion comprising a series of the above mentioned compounds is prepared as a coating solution having a concentration of about 0.1 to about 50% by weight in terms of a solid content thereof, and the thus prepared coating solution is applied onto the polyester film. The coating solution may also comprise a small amount of an organic solvent for the purpose of improving a dispersibility in water, a film-forming property, etc., unless the subject matter of the present invention is adversely affected thereby. The organic solvents may be used alone, or may be appropriately used in the form of a mixture of any two or more thereof.

The film thickness of the first coating layer is usually in the range of 0.01 to 0.20 µm and preferably 0.02 to 0.10 µm. When the film thickness of the first coating layer is less than 0.01 µm, the obtained coating layer tends to fail to exhibit a sufficient adhesion property. When the film thickness of the first coating layer is more than 0.20 µm, the resulting film tends to be deteriorated in appearance or transparency as well as anti-blocking property.

The film thickness of the second coating layer is usually in the range of 0.04 to 0.20 µm and preferably 0.07 to 0.15 µm. When the film thickness of the coating layer is out of the above-specified range, the resulting film tends to be deteriorated in visibility owing to occurrence of interference fringes after laminating a surface functional layer on the coating layer.

In the present invention, as the method of forming the coating layer, there may be used conventionally known coating methods such as a reverse gravure coating method, a direct gravure coating method, a roll coating method, a die coating method, a bar coating method and a curtain coating method.

The drying and curing conditions used upon forming the coating layer on the polyester film are not particularly limited. For example, in the case where the coating layer is formed by an off-line coating method, the coating layer may be subjected to heat-setting usually at a temperature of 80 to 200°C for 3 to 40 sec and preferably at a temperature of 100 to 180°C for 3 to 40 sec.

On the other hand, in the case where the coating layer is formed by an in-line coating method, the coating layer may be subjected to heat-setting usually at a temperature of 70 to 280°C for 3 to 200 sec.

In any of the off-line coating and in-line coating methods, the heat-setting may be used in combination with irradiation with active energy rays such as irradiation with ultraviolet rays, if required. The polyester film constituting the coated film of the present invention may be previously subjected to surface treatments such as corona treatment and plasma treatment.

The refractive index of the first coating layer is suitably controlled so as to be similar or close to the refractive index (1.60 to 1.70) of the polyester film as the base material in order to highly suppress occurrence of interference fringes, etc. The refractive index of the coating layer has a close relationship with a reflectance of the coating layer. The absolute reflectance of the first coating layer is adjusted such that when preparing a graph by plotting a wavelength on an abscissa axis thereof and a reflectance on an ordinate axis thereof, a minimum value of the absolute reflectance of the first coating layer is usually 5.5 to 6.5%, preferably 5.6 to 6.4% and more preferably 5.7 to 6.3% as measured at an optional wavelength in the wavelength range of 400 to 800 nm. When the reflectance is out of the above-specified range, the difference between the refractive index of the first coating layer and the refractive index (1.60 to 1.70) of the surface functional layer such as a hard coat layer which is formed on the first coating layer tends to be increased, so that the resulting film tends to suffer from strong interference fringes and therefore tends to be deteriorated in visibility.

The second coating layer is suitably controlled in its refractive index in order to suppress occurrence of interference fringes owing to reflection of external light, and may be designed such that the refractive index of the second coating layer is near a geometrical mean value of the refractive index (1.60 to 1.70) of the polyester film as the base material and the refractive index (1.45 to 1.65) of the surface functional layer such as a hard coat layer, more specifically, in the range of 1.55 to 1.60. The absolute reflectance of the second coating layer is adjusted such that when preparing a graph by plotting a wavelength on an abscissa axis thereof and a reflectance on an ordinate axis thereof, one minimum value of the reflectance must be observed on a characteristic curve thereof in the wavelength range of 400 to 800 nm wherein the minimum value is not less than 4.0%, and the one minimum value of the absolute reflectance is preferably observed in the range of 500 to 700 nm wherein the minimum value is preferably 4.0 to 6.5% and more preferably 4.5 to 6.2%. In the case where only one minimum value of the absolute reflectance is not present in the wavelength range of 400 to 800 nm or in the case where the minimum value of the absolute reflectance is out of the above-specified range, interference fringes tend to be caused after forming the surface functional layer such as a hard coat layer on the second coating layer, so that the resulting film tends to be deteriorated in visibility.

In general, in the coated film according to the present invention, the surface functional layer such as a hard coat layer may be provided on the coating layer. The material used in the hard coat layer is not particularly limited. Examples of the material for the hard coat layer include cured products of monofunctional (meth)acrylates, polyfunctional (meth)acrylates and reactive silicon compounds such as tetraethoxysilane. Among these materials, from the viewpoint of satisfying both a good productivity and a high hardness, especially preferred are cured products obtained by polymerizing compositions comprising ultraviolet-curable polyfunctional (meth)acrylates.

The compositions comprising the above ultraviolet-curable polyfunctional (meth)acrylates are not particularly limited. For example, there may be used a composition prepared by mixing one or more kinds of conventionally known ultraviolet-curable polyfunctional (meth)acrylates, a composition commercially available as an ultraviolet-curable hard coat agent, or a composition prepared by further adding the other components to the above compositions in such a range that the effects and objects of the present invention are not adversely influenced thereby.

The ultraviolet-curable polyfunctional (meth)acrylates are not particularly limited. Examples of the ultraviolet-curable polyfunctional (meth)acrylates include (meth)acrylic derivatives of polyfunctional alcohols such as dipentaerythritol hexa(meth)acrylate, tetramethylol methane tetra(meth)acrylate, tetramethylol methane tri(meth)acrylate, trimethylol propane tri(meth)acrylate, 1,6-hexanediol di(meth)acrylate and 1,6-bis(3-acryloyloxy-2-hydroxypropyloxy)hexane; polyethylene glycol di(meth)acrylate; and polyurethane (meth)acrylate.

The other components which may be contained in the compositions comprising the ultraviolet-curable polyfunctional (meth)acrylates are not particularly limited. Examples of the other components include inorganic or organic fine particles, a polymerization initiator, a polymerization inhibitor, an antioxidant, an antistatic agent, a dispersant, a surfactant, a light stabilizer and a leveling agent. In addition, when drying the film formed by a wet coating method, an optional amount of a solvent may be added to the compositions, if required.

As the method of forming the hard coat layer by using an organic material, there may be adopted general wet coating methods such as a roll coating method and a die coating method. The thus formed hard coat layer may be subjected to curing reaction, if required, by heating or by irradiating an active energy ray such as an ultraviolet ray and an electron beam thereto.

### EXAMPLES

The present invention is described in more detail below by Examples. However, these Examples are only illustrative and not intended to limit the present invention thereto. In addition, the measuring and evaluating methods used in the present invention are as follows.

### (1) Measurement of intrinsic viscosity of polyester:

One gram of a polyester from which the other polymer components incompatible with the polyester and pigments were previously removed was accurately weighed, and mixed with and dissolved in 100 mL of a mixed solvent comprising phenol and tetrachloroethane at a weight ratio of 50:50, and a viscosity of the resulting solution was measured at 30°C.

### (2) Measurement of average particle diameter:

The surface of the coating layer was observed using TEM ("H-7650" manufactured by Hitachi; accelerated voltage: 100 V) to measure particles diameters of 10 particles and calculate an average value of the thus measured particles diameters as an average particle diameter thereof.

### (3) Measurement of thickness of coating layer:

The surface of the coating layer was dyed with RuO₄, and the resulting film was embedded in an epoxy resin. Thereafter, the resin-embedded coating layer was cut into a piece by an ultrathin sectioning method, and the cut piece was dyed with RuO₄ to observe and measure a cut section of the coating layer using TEM ("H-7650" manufactured by Hitachi; accelerated voltage: 100 V).

### (4) Measurement of absolute reflectance from surface of coating layer formed on one surface of polyester film:

A black tape (a vinyl tape "VT-50" produced by Nichiban Co., Ltd.) was previously attached to a back surface of a polyester film which was opposite to its surface to be measured, and the surface of a coating layer formed on the polyester film was subjected to measurement for an absolute reflectance thereof in a wavelength range of 400 to 800 nm using a spectrophotometer (an ultraviolet/visible spectrophotometer "V-570" and an automatic absolute reflectance analyzer "ARM-500N" both manufactured by JASCO Corp.) under the conditions of a synchronous mode; incident angle: 5°; N-polarization; response: Fast; data sampling interval: 1.0 nm; band width: 10 nm; and scanning speed: 1000 nm/min.

### (5) Evaluation of interference fringes on first coating layer:

A coating solution prepared by mixing 60 parts by weight of dipentaerythritol acrylate, 15 parts by weight of 1,6-hexanediol acrylate, 25 parts by weight of antimony pentaoxide, 1 part by weight of a photopolymerization initiator ("IRGACURE 184" (tradename) produced by Ciba Specialty Chemicals Corp.) and 200 parts by weight of methyl ethyl ketone was applied on the first coating layer formed on the polyester film such that a coating thickness thereof after drying was 5 µm, and cured by irradiating an ultraviolet ray thereto to thereby form a hard coat layer having a refractive index similar to that of the polyester film. The resulting film was visually observed under irradiation with light using a three band fluorescent lamp to determine whether or not any interference fringes were recognized on the first coating layer side. The observation results were evaluated according to the following ratings:
A: No interference fringes were recognized.
B: Thin and scattered interference fringes were recognized.
C: Thin but linear interference fringes were recognized.
D: Clear interference fringes were recognized.

### (6) Evaluation of adhesion property of first coating layer:

In order to evaluate an adhesion property of the first coating layer, studies have been conducted using a material obtained by excluding antimony pentaoxide from the hard coat solution used in the above evaluation (5). More specifically, a coating solution prepared by mixing 80 parts by weight of dipentaerythritol acrylate, 20 parts by weight of 1,6-hexanediol acrylate, 5 part by weight of a photopolymerization initiator ("IRGACURE 184" (tradename) produced by Ciba Specialty Chemicals Corp.) and 200 parts by weight of methyl ethyl ketone was applied on the coating layer formed on the polyester film such that a coating thickness thereof after drying was 5 µm, and cured by irradiating an ultraviolet ray thereto to thereby form a hard coat layer. The thus obtained film was allowed to stand under environmental conditions of 60°C and 90% RH for 100 hr. Thereafter, the resulting hard coat layer was subjected to cross-cutting to form 100 (10 x 10) cross-cuts thereon. A 18 mm-wide tape ("Cellotape (registered trademark) CT-18" produced by Nichiban Co., Ltd.) was attached onto the thus cross-cut hard coat layer, and then rapidly peeled off therefrom at a peel angle of 180°. Then, the surface of the hard coat layer from which the tape was peeled off was observed to measure an area of the hard coat layer peeled off together with the tape. The evaluation ratings are as follows.
A: Peeled area of the hard coat layer was less than 3%.
B: Peeled area of the hard coat layer was not less than 3% but less than 10%.
C: Peeled area of the hard coat layer was not less than 10% but less than 50%.
D: Peeled area of the hard coat layer was not less than 50%.

### (7) Evaluation of interference fringes on second coating layer:

A coating solution prepared by mixing 72 parts by weight of dipentaerythritol acrylate, 18 parts by weight of 2-hydroxy-3-phenoxypropyl acrylate, 10 parts by weight of antimony pentaoxide, 1 part by weight of a photopolymerization initiator ("IRGACURE 184" (tradename) produced by Ciba Specialty Chemicals Corp.) and 200 parts by weight of methyl ethyl ketone was applied on the second coating layer formed on the polyester film such that a coating thickness thereof after drying was 5 µm, and cured by irradiating an ultraviolet ray thereto to thereby form a hard coat layer. The resulting film was visually observed under irradiation with light using a three band fluorescent lamp to determine whether or not any interference fringes were recognized on the second coating layer side. The observation results were evaluated according to the following ratings:
A: No interference fringes were recognized.
B: Thin and scattered interference fringes were recognized.
C: Thin but linear interference fringes were recognized.
D: Clear interference fringes were recognized.

### (8) Evaluation of adhesion property of second coating layer:

In order to evaluate an adhesion property of the coating layer, studies have been conducted using a material obtained by excluding antimony pentaoxide from the hard coat solution used in the above evaluation (7). More specifically, a coating solution prepared by mixing 72 parts by weight of dipentaerythritol acrylate, 18 parts by weight of 2-hydroxy-3-phenoxypropyl acrylate, 1 part by weight of a photopolymerization initiator ("IRGACURE 184" (tradename) produced by Ciba Specialty Chemicals Corp.) and 200 parts by weight of methyl ethyl ketone was applied on the coating layer formed on the polyester film such that a coating thickness thereof after drying was 5 µm, and cured by irradiating an ultraviolet ray thereto to thereby form a hard coat layer. The thus obtained film was allowed to stand under environmental conditions of 60°C and 90% RH for 100 hr. Thereafter, the resulting hard coat layer was subjected to cross-cutting to form 100 (10 x 10) cross-cuts thereon. A 18 mm-wide tape ("Cellotape (registered trademark) CT-18" produced by Nichiban Co., Ltd.) was attached onto the thus cross-cut hard coat layer, and then rapidly peeled off therefrom at a peel angle of 180°. Then, the surface of the hard coat layer from which the tape was peeled off was observed to measure an area of the hard coat layer peeled off together with the tape. The evaluation ratings are as follows.
A: Peeled area of the hard coat layer was less than 3%.
B: Peeled area of the hard coat layer was not less than 3% but less than 10%.
C: Peeled area of the hard coat layer was not less than 10% but less than 50%.
D: Peeled area of the hard coat layer was not less than 50%.

The polyesters used in the respective Examples and Comparative Examples were prepared by the following methods.

### <Method for producing polyester (A)>

One hundred parts by weight of dimethyl terephthalate and 60 parts by weight of ethylene glycol as well as ethyl acid phosphate and magnesium acetate tetrahydrate as a catalyst in amounts of 30 ppm and 100 ppm, respectively, based on the polyester to be produced, were subjected to esterification reaction at 260°C in a nitrogen atmosphere. Successively, tetrabutyl titanate in an amount of 50 ppm based on the polyester to be produced was added to the reaction solution. While heating the resulting mixture to 280°C over 2 hr and 30 min, the pressure of the reaction system was reduced to an absolute pressure of 0.3 kPa, and further the mixture was subjected to melt-polycondensation for 80 min, thereby obtaining a polyester (A) having an intrinsic viscosity of 0.63.

### <Method for producing polyester (B)>

One hundred parts by weight of dimethyl terephthalate and 60 parts by weight of ethylene glycol as well as magnesium acetate tetrahydrate as a catalyst in an amount of 900 ppm based on the polyester to be produced, were subjected to esterification reaction at 225°C in a nitrogen atmosphere. Successively, orthophosphoric cid and germanium dioxide in amounts of 3500 ppm and 70 ppm, respectively, based on the polyester to be produced, were added to the reaction solution. While heating the resulting mixture to 280°C over 2 hr and 30 min, the pressure of the reaction system was reduced to an absolute pressure of 0.4 kPa, and further the mixture was subjected to melt-polycondensation for 85 min, thereby obtaining a polyester (B) having an intrinsic viscosity of 0.64.

### <Method for producing polyester (C)>

100 parts by weight of dimethyl terephthalate, 60 parts by weight of ethylene glycol and 2 parts by weight of diethylene glycol as starting materials were charged together with antimony trioxide as a catalyst into a reactor, and the reaction therebetween was initiated at 150°C. The reaction temperature was gradually raised while distilling off methanol produced, and allowed to reach 230°C after 3 hr. After 4 hr, the transesterification reaction was substantially terminated, and then the resulting reaction mixture was subjected to polycondensation reaction for 4 hr. More specifically, the reaction temperature was gradually raised from 230°C until reaching 280°C. On the other hand, the reaction pressure was gradually reduced from normal pressure until finally reaching 0.3 mmHg. After initiation of the reaction, an agitation power in the reaction vessel was monitored, and the reaction was terminated at the time at which a viscosity of the reaction solution reached the value corresponding to an intrinsic viscosity of 0.63, which was determined by the change in agitation power in the reaction vessel. The resulting polymer was discharged under application of a nitrogen pressure from the reaction vessel. The thus obtained chips were subjected to preliminary crystallization at 160°C and then to solid state polymerization at 220°C in a nitrogen atmosphere, thereby obtaining a polyester (C) having an intrinsic viscosity of 0.85.

### <Method for producing polyester (D)>

The same procedure as used in the above method for producing the polyester (A) was conducted except that silica particles having an average particle diameter of 2 µm were added in an amount of 0.3 part by weight before conducting the melt-polycondensation, thereby obtaining a polyester (D).

Examples of the compounds constituting the coating layers are as follows.

### (Examples of compounds)

### · Polyester resin (EI):

Water dispersion of a polyester resin obtained by copolymerizing the following composition:
Monomer composition: (acid component) terephthalic acid/isophthalic acid/5-sodium sulfoisophthalic acid//(diol component) ethylene glycol/1,4-butanediol/diethylene glycol
   = 56/40/4//70/20/10 (mol%)

### · Polyester resin having a condensed polycyclic aromatic

### structure (EII):

Water dispersion of a polyester resin obtained by copolymerizing the following composition:
   Monomer composition: (acid component) 2,6-naphthalenedicarboxylic acid/5-sodium sulfoisophthalic acid//(diol component) ethylene glycol/diethylene glycol = 92/8//80/20 (mol%)

### · Acrylic resin (AI):

Water dispersion of an acrylic resin obtained by polymerizing the following composition:
   Monomer composition: Emulsion polymer (emulsifier: anionic surfactant) produced from ethyl acrylate/n-butyl acrylate/methyl methacrylate/N-methylol acrylamide/acrylic acid = 65/21/10/2/2 (% by weight)

### · Urethane resin (UI):

Carboxylic acid-water-dispersed type polyester polyurethane resin "HYDRAN AP-40" (produced by DIC Corp.)

### · Epoxy compound (CIA):

Polyglycerol polyglycidyl ether "DECONAL EX-521" (produced by Nagase Chemtex Co., Ltd.)

### · Epoxy compound (CIB):

Epoxy resin "DECONAL EX-1410" (produced by Nagase Chemtex Co., Ltd.)

### · Oxazoline compound (CIIA):

Acrylic polymer having an oxazoline group and a polyalkyleneoxide chain "EPOCROSS WS-500" (produced by Nippon Shokubai Co., Ltd.; a polymer of a type comprising a 1-methoxy-2-propanol solvent in an amount of about 38%).

### · Oxazoline compound (CIIB):

Acrylic polymer having an oxazoline group and a polyalkyleneoxide chain "EPOCROSS WS-700" (produced by Nippon Shokubai Co., Ltd.; VOC-free type).

### · Isocyanate compound (CIII):

Polyester resin-containing blocked isocyanate-based compound obtained by blocking an isocyanate group of a polyisocyanate produced from 200 parts of a polyester having an average molecular weight of 1000 which was obtained from an adduct of bisphenol A with 2 mol of ethyleneoxide and maleic acid, and 33.6 parts of hexamethylene diisocyanate, with 84 parts of sodium bisulfite.
· Hexamethoxymethyl melamine (CIV)
· Titanium oxide particles having an average particle diameter of 15 nm (FI)
· Zirconium oxide particles having an average particle diameter of 15 nm (FII)
· Silica particles having an average particle diameter of 0.07 µm (FIII)
· Silica particles having an average particle diameter of 0.15 µm (FIV)

### Example 1:

A mixed raw material obtained by mixing the polyesters (A) and (B) in amounts of 90% and 5%, respectively, as a raw material for an intermediate layer, and a mixed raw material obtained by mixing the polyesters (C) and (D) in amounts of 90% and 10%, respectively, as a raw material for outermost layers (surface layers), were respectively charged into two extruders, melted therein at 290°C, and then co-extruded therefrom on a chilled roll whose surface was controlled to a temperature of 40°C into a two-kind resin/three-layer structure (surface layer/intermediate layer/surface layer = 1:38:1 as output), followed by cooling and solidifying the thus extruded sheet on the chilled roll, thereby obtaining an undrawn sheet. Next, the thus obtained undrawn sheet was drawn utilizing a difference between peripheral speeds of rolls at 85°C at a draw ratio of 3.4 times in a longitudinal direction thereof. Thereafter, a coating solution A1 shown in the below-mentioned Table 1 was applied on one surface of the thus obtained longitudinally drawn sheet (formation of a first coating layer), and further a coating solution B1 shown in the below-mentioned Table 2 was applied on the opposite surface of the drawn sheet (formation of a second coating layer). Then, the resulting coated sheet was introduced into a tenter where the sheet was drawn at 120°C at a draw ratio of 4.0 times in a lateral direction thereof and then heat-set at 225°C. Then, the obtained drawn sheet was relaxed by 2% in a lateral direction thereof, thereby obtaining a 125 µm-thick polyester film provided on the both surfaces thereof with the first and second coating layers each having a thickness of 0.10 µm (after dried), respectively.

As a result of measuring an absolute reflectance of the thus obtained polyester film, it was confirmed that the minimum reflectance of the first coating layer as measured at an optional wavelength in the wavelength range of 400 to 800 nm was 5.5%, and the resulting film was free from clear interference fringes after laminating a hard coat layer on the coating layer, and also exhibited a good adhesion property. Also, as a result of measuring an absolute reflectance of the second coating layer of the resulting polyester film, it was confirmed that the minimum value of the absolute reflectance of the second coating layer as measured at a wavelength of 600 nm was 5.0%, and the resulting film was free from clear interference fringes after laminating a hard coat layer on the coating layer, and also exhibited a good adhesion property. The properties of the thus obtained film are shown in Table 3 below.

### Examples 2 to 37:

The same procedure as in Example 1 was conducted except that the coating agent compositions were changed as shown in Tables 1 and 2, thereby obtaining polyester films. As shown in Tables 3 and 4 below, it was confirmed that the first and second coating layers of the respective polyester films exhibited a good adhesion property, and occurrence of interference fringes thereon was kept in a good level.

### Comparative Examples 1 to 11:

The same procedure as in Example 1 was conducted except that the coating agent composition for the first coating layer was changed as shown in Tables 1 and 2, thereby obtaining polyester films. As shown in Table 5, it was confirmed that some of the thus obtained coated films were deteriorated in suppression of occurrence of interference fringes, or some others of the coated films were deteriorated in adhesion to the hard coat layer.

### Comparative Example 12:

The same procedure as in Example 1 was conducted except that no first coating was formed, thereby obtaining a polyester film. As shown in Table 5, it was confirmed that the thus obtained coated film was deteriorated in adhesion to the hard coat layer.

**Table 1**

| Coating solution | Coating agent composition (wt%) | | | | | | | |
|---|---|---|---|---|---|---|---|---|
| | EI | EII | CIA | CIB | CIIA | CIII | CIV | FI |
| A1 | 0 | 80 | 5 | 0 | 0 | 0 | 0 | 15 |
| A2 | 15 | 55 | 5 | 0 | 0 | 0 | 0 | 25 |
| A3 | 60 | 0 | 5 | 0 | 0 | 0 | 0 | 35 |
| A4 | 60 | 0 | 0 | 5 | 0 | 0 | 0 | 35 |
| A5 | 60 | 0 | 10 | 0 | 0 | 0 | 0 | 30 |
| A6 | 60 | 0 | 0 | 10 | 0 | 0 | 0 | 30 |
| A7 | 25 | 30 | 15 | 0 | 0 | 0 | 0 | 30 |
| A8 | 10 | 40 | 20 | 0 | 0 | 0 | 0 | 30 |
| A9 | 25 | 30 | 10 | 0 | 5 | 0 | 0 | 30 |
| A10 | 10 | 40 | 10 | 0 | 10 | 0 | 0 | 30 |
| A11 | 25 | 30 | 10 | 0 | 0 | 5 | 0 | 30 |
| A12 | 10 | 40 | 10 | 0 | 0 | 10 | 0 | 30 |
| A13 | 10 | 30 | 30 | 0 | 0 | 0 | 0 | 30 |
| C1 | 60 | 0 | 0 | 0 | 0 | 0 | 10 | 30 |
| C2 | 10 | 40 | 0 | 0 | 0 | 0 | 20 | 30 |
| C3 | 0 | 0 | 70 | 0 | 0 | 0 | 0 | 30 |
| C4 | 50 | 20 | 0 | 0 | 0 | 0 | 0 | 30 |
| C5 | 80 | 0 | 20 | 0 | 0 | 0 | 0 | 0 |
| C6 | 0 | 80 | 20 | 0 | 0 | 0 | 0 | 0 |

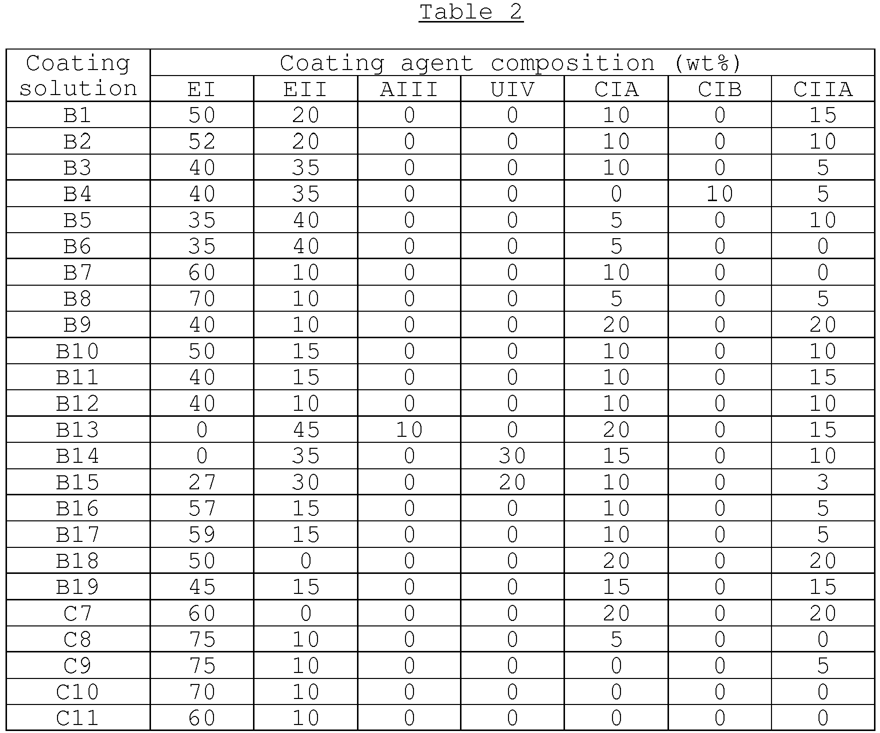

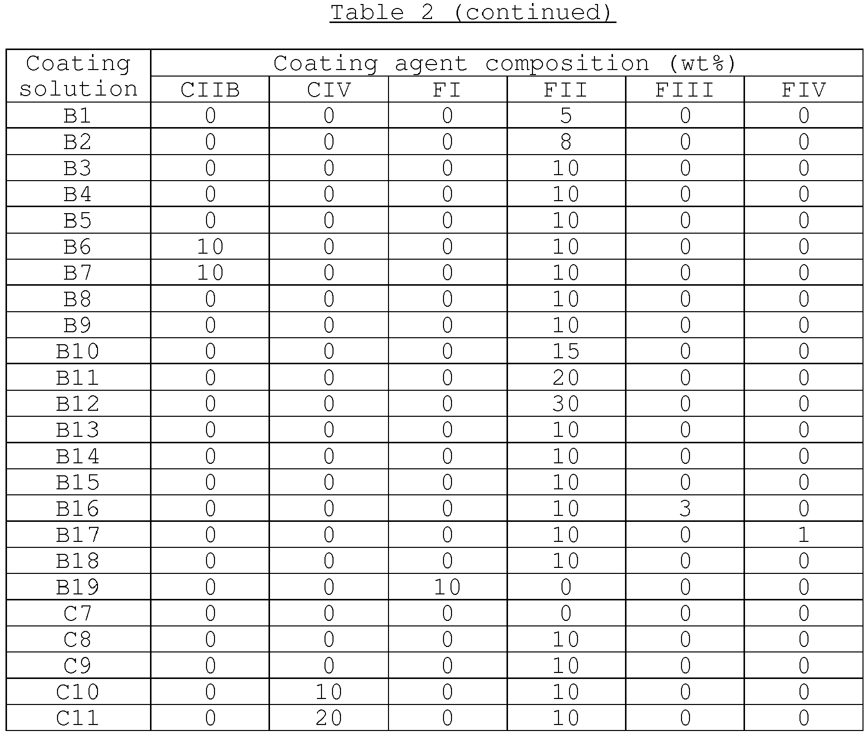

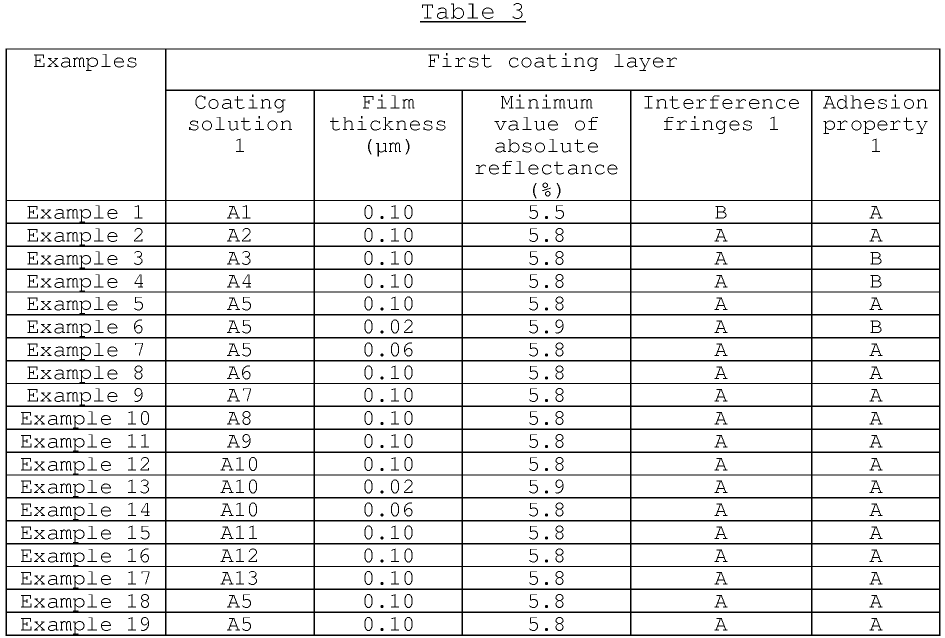

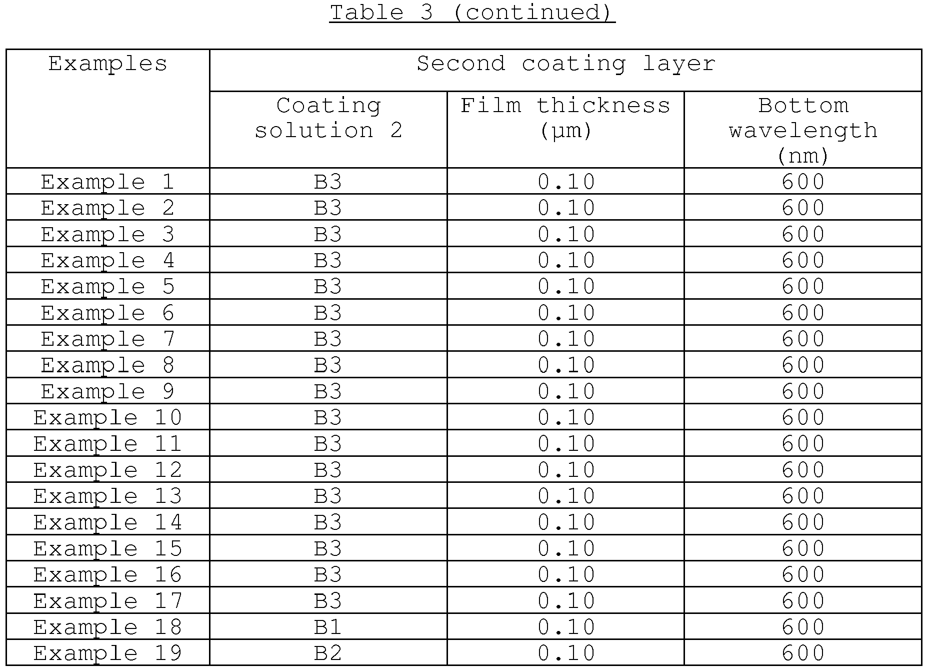

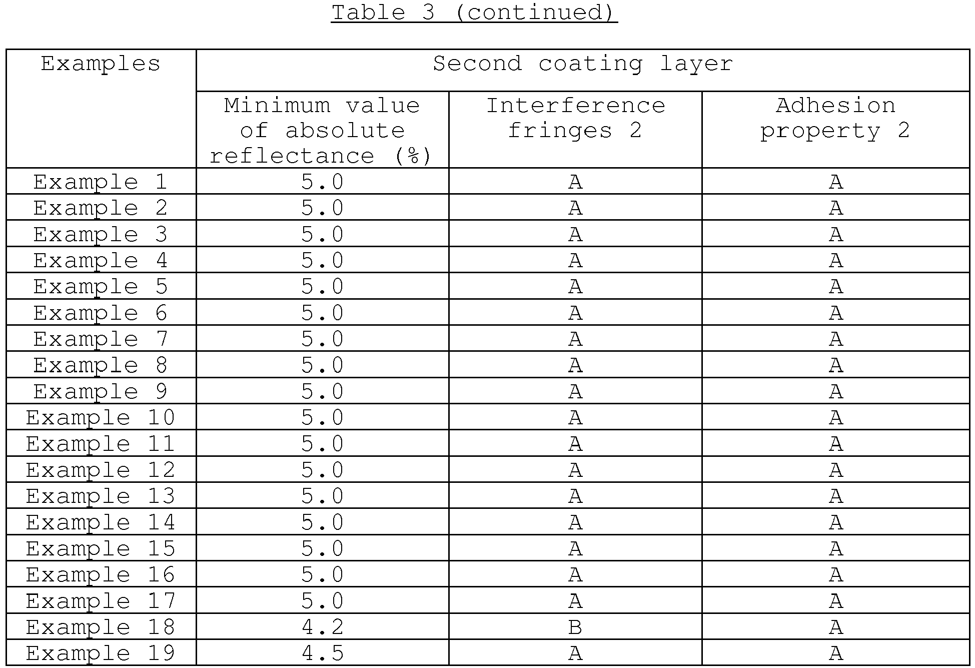

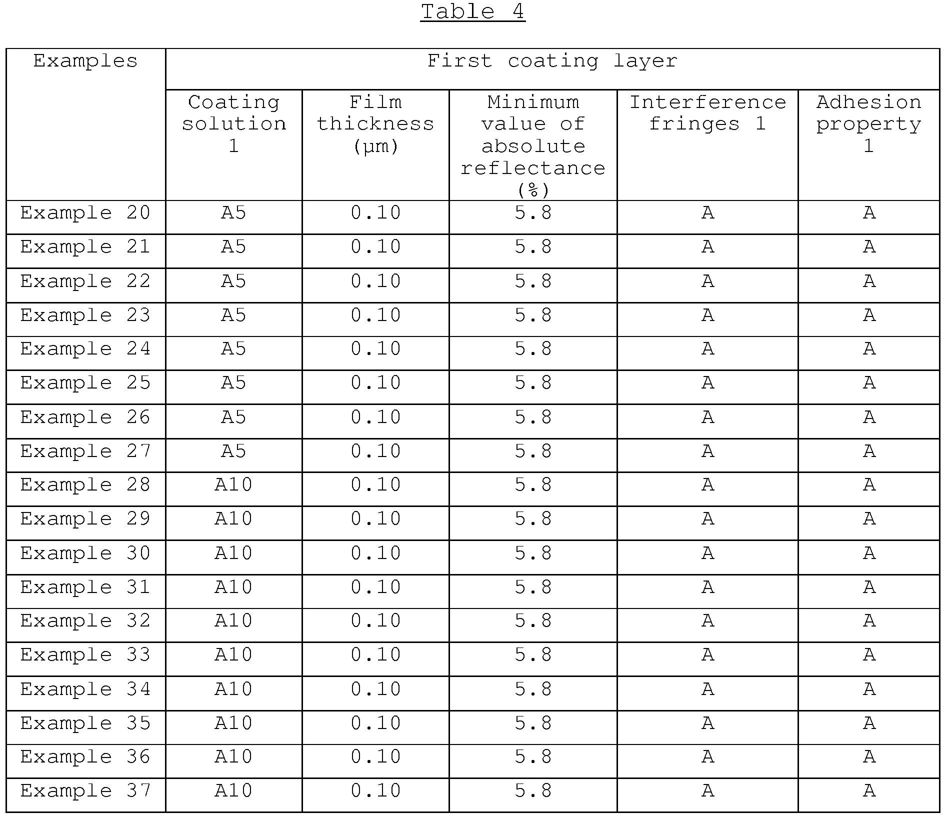

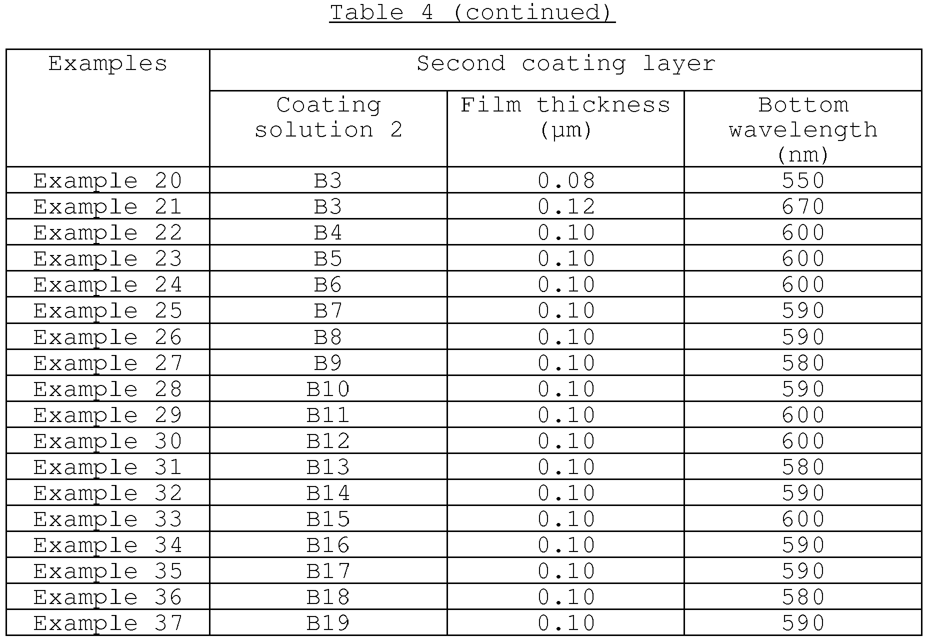

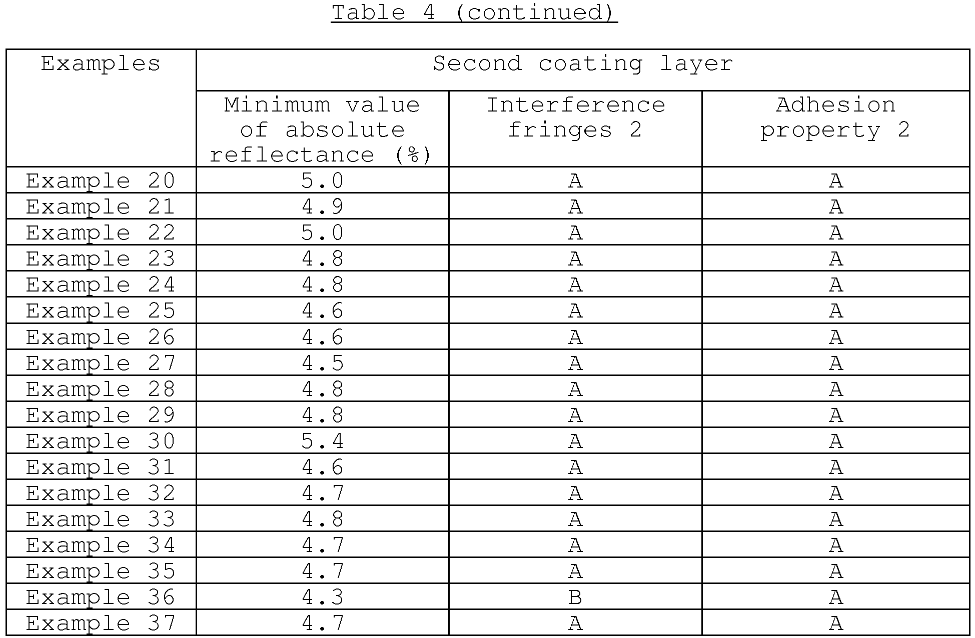

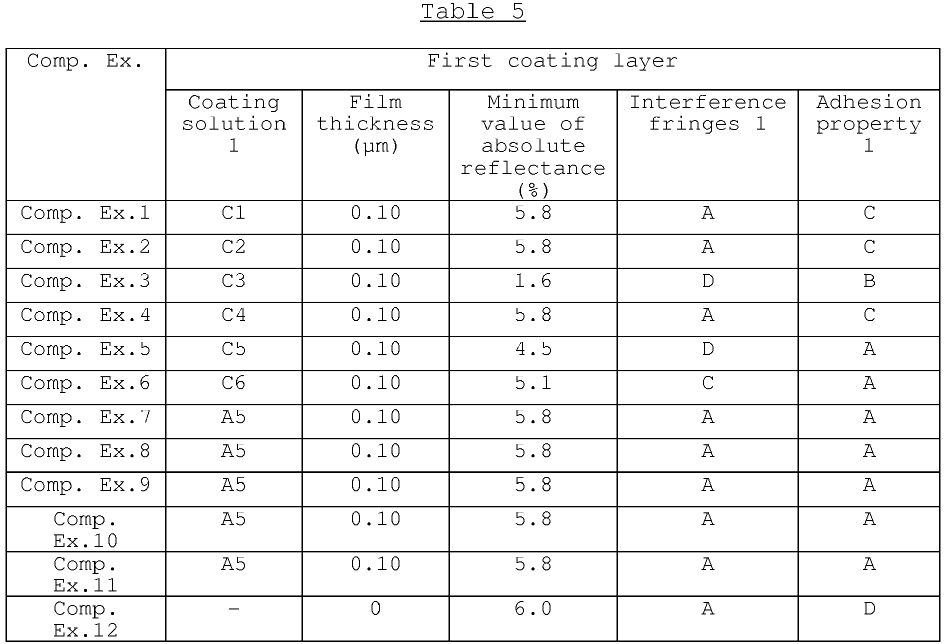

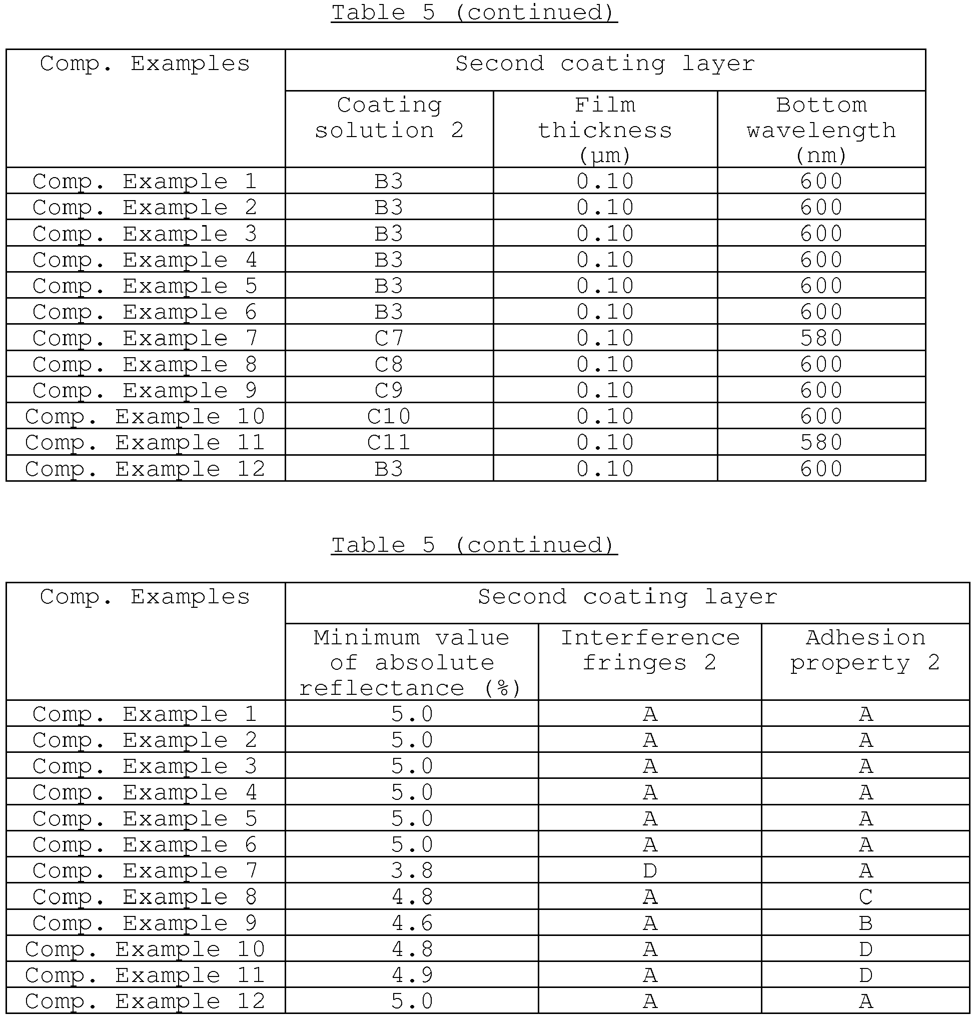

### INDUSTRIAL APPLICABILITY

The coated film of the present invention can be suitably used in the applications in which good adhesion to various optical films as members for liquid crystal displays or plasma displays and to surface functional layers such as a hard coat layer as well as good visibility are required with importance.

## Claims

1. A coated film comprising:
a polyester film,
a first coating layer formed on one surface of the polyester film which is prepared from a coating solution comprising a polyester resin, titanium oxide and an epoxy compound, and
a second coating layer formed on the other surface of the polyester film which is prepared from a coating solution comprising a metal oxide and two or more crosslinking agents and which has an absolute reflectance having one minimum value in a wavelength range of 400 to 800 nm, and which has the absolute reflectance at the minimum value of not less than 4.0%.

2. The coated film according to claim 1, wherein the metal oxide in the coating solution for forming the second coating layer is zirconium oxide or titanium oxide.

3. The coated film according to claim 1 or 2, wherein one of the crosslinking agents in the coating solution for forming the second coating layer is an oxazoline compound or an epoxy compound, or two of the crosslinking agents are an oxazoline compound and an epoxy compound.

4. The coated film according to any one of claims 1 to 3, wherein contents of the polyester resin, the titanium oxide and the epoxy compound in the coating solution for forming the first coating layer are 10 to 90% by weight, 5 to 60% by weight and 1 to 50% by weight, respectively, based on a total weight of whole non-volatile components in the coating solution, whereas contents of the metal oxide and the two or more crosslinking agents in the coating solution for forming the second coating layer are 3 to 70% by weight and 2 to 80% by weight, respectively, based on a total weight of whole non-volatile components in the coating solution.

5. The coated film according to any one of claims 1 to 4, wherein the coating solution for forming the second coating layer further comprises a compound having a condensed polycyclic aromatic structure, and a content of the compound having a condensed polycyclic aromatic structure in the coating solution for forming the second coating layer is 5 to 80% by weight based on a total weight of whole non-volatile components in the coating solution.
